# EUROPÄISCHE PATENTANMELDUNG

(11) **EP 0 565 921 A2**
(43) Veröffentlichungstag der Anmeldung: **20.10.1993**
(21) Anmeldenummer: 93104881.3
(22) Anmeldetag: 24.03.1993
(51) Int. Cl.: E03B 1/04

(54) **Anlage zur Aufbereitung und Förderung von Regenwasser zur Nutzung als Brauchwasser oder zur Regenwasserbehandlung zum Zwecke der Versickerung oder der Einleitung in einen Vorfluter**

(30) Priorität: 24.03.1992 DE 4209429
(71) Anmelder: Herrmann, Thilo, D-30175 Hannover (DE)
(72) Erfinder: Herrmann, Thilo, D-30175 Hannover (DE)

(57) **Zusammenfassung**

1. Bezeichnung

Anlage zur Aufbereitung, Speicherung und Förderung von Regenwasser zur Nutzung als Brauchwasser oder zur Regenwasserbehandlung zum Zwecke der Versickerung oder der Einleitung in einen Vorfluter.

2. Kurzfassung

2.1 Zielsetzung

Ziel der Erfindung ist die wartungsarme und kostengünstige Aufbereitung, Reinigung und Speicherung von Regenwasser zur Nutzung als Brauchwasser in Haushalt, Industrie, Gewerbe und öffentlichen Gebäuden oder zum Zwecke der Versickerung oder Einleitung in einen Vorfluter, unter Berücksichtigung der Frostsicherheit, mit geringem Wartungsaufwand, ohne Verschleißteile, mit regenerierbarem Filter, mit frostabhängigem Füllstand, mit rückstaugesichertem Überlauf und kompakter Bauweise. 2.2 Lösung der technischen Aufgabe

Das Regenwasser wird durch schnelle Sedimentation, Filtration über ein Tiefenfilter und nachfolgende langsame Sedimentation gereinigt. Der Filter ist mit einer waschbaren, herausnehmbaren Filterschüttung versehen und ermöglicht durch die spezielle Bauform hohe Fiterquerschnitte bei geringem Bauvolumen. Durch variablen Überstau ist frostsichere und normgerechte Verlegung der Entwässerungsleitungen möglich, ohne Verlust an Füllhöhe im Speicher. Durch Einrichtungen zur Schichtung und Strömungsführung im Speicher wird das Wasser vor Entnahme durch langsame Sedimentation von Schwebstoffen befreit. Durch variablen maximalen Wasserstand in Abhängigkeit von der Außentemperatur ist in der frostfreien Jahreszeit die Nutzung eines vergrößerten Speichervolumens möglich.

2.3 Anwendungsgebiet

Hauptverwendung der beschriebenen Anlage ist die Aufbereitung von Dachablaufwasser für Brauchwasserzwecke. Die Aufbereitung von Oberflächenabflußwasser von versiegelten Flächen ist ebenfalls möglich. Daneben kann der Regenabfluß von versiegelten Flächen vor der Versickerung oder der Einleitung in einen Vorfluter mit diesem System gereinigt werden.

## Beschreibung

Anlage zur Aufbereitung, Speicherung und Forderung von Regenwasser zur Nutzung als Brauchwasser oder zur Regenwasserbehandlung zum Zwecke der Versickerung oder der Einleitung in einen Vorfluter.

Die Erfindung betrifft eine Anlage zur Aufbereitung, Speicherung und Forderung von Niederschlagswasser befestigter Flächen wie Dächer, Straßen und Hofplätze zur Nutzung als Brauchwasser in Haushalt, Gewerbe, Industrie und öffentlichen Gebäuden oder zum Zwecke der Versickerung oder Einleitung in einen Vorfluter. Die Anlage besteht hauptsächlich aus Filtersystem mit Sinkstoffabscheider, Speicherbehälter mit Einrichtungen zur Strömungsführung und Sedimentation und einer Steuerungseinheit. Weitere Bestandteile der Anlage sind Einrichtungen zur Füllstandsregulierung, Förderung des Brauchwassers, Anordnungen zur Sicherung gegen Rückstau aus der Kanalisation, Einrichtungen zur Entkeimung und biologischer Fixierung von Schadstoffen, Einrichtungen zum biologischen Abbau von organischen Stoffen, Anordnungen zur Durchführung von Rohren, Leitungen und Kabeln durch Speicherbehälter- und Gebäudewände, Anordnungen zur Auftriebsicherung des Speicherbehälters, Einrichtungen zur Versickerung des Überlaufwassers.

Die Nutzung des Regenwassers von Dachflächen für Brauchwasserzwecke /1/4/, und die Vorreinigung des Regenwassers in einer separaten Filterkammer /1/2/3/5/12/14/ vor dem Vorratsbehälter sind bekannt. Ebenso sind mechanische Oberflächenfilter wie Feinsiebe /2/11/15/16/ und Porenbeton /14/ zur Reinigung des Niederschlagswassers bekannt.

Zur Wasserspeicherung werden Beton oder Kunststoffbehälter eingesetzt /2/3/12/14/16/, die im Erdreich oder in Kellerräumen untergebracht sind.

Bei Regenwassermangel läuft über ein schwimmergesteuertes Ventil im Speicherbehälter Trinkwasser in den Speicherbehälter nach /1/2/4/.

Das Wasser wird aus dem Speicherbehälter meist durch ein sogenanntes Fußventil von einer Pumpe angesaugt, und zu den Verbrauchern weitergeleitet /5/9/16/.

Bei den Anlagen zur Aufstellung in Kellerräumen sind Filter, Speicher, Pumpe- und Steuerung teilweise zu einer Montageeinheit zusammengefaßt /1 0/16/. Bei den Anlagen mit Speicher im Erdreich ist als kompakte Bauform die Anordnung /9/ bekannt, bei der Pumpe und Filter oberhalb des Speichers angeordnet sind.

Obwohl verschiedene Entwicklungen zurAufbereitung von Regenwasser bekannt sind, ergeben sich in der Praxis mit den bekannten Anlagen eine Reihe von Problemen:
Die Filtration von Regenwasser über Oberflächenfilter wie Feinsiebe und Gewebe bereitet wegen der schnellen Verstopfung der Filter Probleme. Selbst bei Maschenweiten von 2mm wurde ein rasches Verstopfen der Siebe beobachtet, das durch die Anlagerung und das Verkleben von Feinstoffen verursacht wird. Die Abtrennung der Feinstoffe aus dem Rohwasser ist notwendig um einen Eintrag in den Speicherbehälter zu verhindern, wo diese Stoffe zur Verkeimung bzw. Fäulnis des Reinwassers führen können.

Zur Überwindung des Filterwiderstands ist ein Druck erforderlich der durch die Höhe der Wassersäule über dem Filter gegeben ist. Um einen hohen Füllstand im Speicherbehälter zu realisieren sollte der Filter möglichst weit oben montiert sein. Diese Forderung kollidiert mit der Forderung nach frostsicherer Verlegung der Regenzuleitungen und dem frostsicheren Einbau des Filters. Bei Bodenfrost und Tauwasseranfall durch Sonneneinstrahlung ist ein sicherer Betrieb nicht gewährleistet. Bei Einbau des Speicherbehälters und ggf. des Filters in Kellerräumen ergeben sich Füllstände, die bei üblichen Gebäuden oberhalb des frostfreien Bereichs im Erdreich liegen. Dadurch ist eine Verlegung der Regenzuleitungen im Erdreich außerhalb des Gebäudes nicht möglich.

Die bekannten Speicherbehälter zum Erdeinbau besitzen keine Sicherung gegen Auftrieb in Grund- oder Stauwasser. Die bekannten Systeme besitzen keine Sicherung gegen Rückstau aus dem Kanalnetz in den Überlauf der Anlagen.

Um beispielsweise den Bedarf an Brauchwasser für Toilette, Waschmaschine und Garten eines Einfamilienhauses zu erreichen, muß das gesamte Dachablaufwasser des Gebäudes erfasst werden. Die anfallenden Niederschläge entsprechen in Mitteleuropa etwa dem Bedarf an Brauchwasser. Dies ist bei den bekannten Filtern nicht gewährleistet, weil die Abflüsse eines z. B. 100m² grossen Daches (in die Waagrechte projezierte Grundfläche) die Durchflußkapazität der bekannten Systeme auch bei sauberem Filter zeitweise überschreiten. Durch die zunehmende Beladung des Filters mit Schmutz geghen so erhebliche Wassermengen der ohne Nutzung verloren.

Die Nachteile der bekannten Systeme sind im folgenden einzeln aufgeführt:
Nachteile der Filtersysteme:
Bei den bekannten Filtern, die im Erdreich eingegraben werden /2/3/12/, erfolgt der Wassereintritt oben in die Filterkammer, um dann über einen Siebeinsatz und ggf. ein Filtervlies oder eine Filterschüttung lotrecht nach unten abzufließen. Die Frostsicherheit dieser Systeme ist nicht gewährleistet, weil die Zuleitungen von den Fallrohren der Dachflächen eines Gebäudes zum Filter oberflächennah verlegt werden müssen, um den Durchlauf des Wassers von oben nach unten durch den Filter zu ermöglichen. Der Winterbetrieb dieser Filter ist deshalb nicht sichergestellt. Bei Einbau der Zuleitungen in frostsichere Tiefe im Boden, würde der Auslauf des Filters wegen des notwendigen Gefälles sehr tief zu liegen kommen, und deshalb müßte auch der Speicherbehälter tiefer eingebaut werden, wodurch die Baukosten ansteigen.

Die wirksame Filterfläche dieser Filter wird durch den waagrechten Querschnitt der Filterkammer bestimmt. Dadurch ergeben sich relativ kleine effektive Filterflächen im Verhältnis zum Flächenverbrauch und der Baugröße der Filterkammer /2/3/5/12/14/.

Zur Überwindung des Filterwiderstandes steht die Druckhöhe der Wassersäule über dem Filter zu Verfügung, weil die Filter von oben nach unten durchströmt werden. Dadurch ergeben sich nur geringe nutzbare Überstauhöhen. Bei der Anordnung /14/ werden nur grobe Stoffe zurückgehalten, der Filterkorb hat eher die Funktion eines Rechens.

Regenwasser enthält nach Trockenperioden einen hohen Feststoffanteil. Dadurch verstopfen die bekannten Oberflächenfilter /2/7/8/ relativ schnell und der Filterwiderstand steigt nach geringer Standzeit an. Die selbstreinigenden Anordnungen /11/15/ zum Einbau in Regenfallrohre neigen wegen der besonderen Eigenschaften der im Regenwasserenthaltenen Stoffe, wie Pollen, zeitweise ebenfalls zum Verstopfen, da die Poren durch Anlagerung von Feinstoffen mit der Zeit verkleben.

Dementsprechend sind Wartungs- und Reinigungsaufwand hoch und der Verlust an nutzbarem Rohwasser wegen Verstopfung und Überlaufen der Filter hoch.

Regenereignisse treten mit unterschiedlichen Intensitäten auf und verursachen deshalb temporär hohe Abflußspitzen. Bei Starkregenereignissen wird deshalb die Durchflußleistung der bekannten Filterkonstruktionen überschritten, so daß die Filter überlaufen und Niederschlagswasser für die Nutzung verloren geht. Diesen Nachteil weisen auch die angebotenen Filtersammler /11/15/ und Abzweige /13/ zum Einbau in die Fallrohre auf. Der Anteil des nutzbaren Niederschlagswassers und damit die Wirtschaftlichkeit wird deshalb entscheidend reduziert.

Die bekannten Filter mit Filterschüttung /2/3/5/ sind nur umständlich zu reinigen, weil Vorkehrungen zur rationellen Entnahme der Schüttung fehlen. Einsätze aus Mineralfasern, Kunststoffvliesen o.ä. sind nicht regenerierbar und müssen nach Verschmutzung ersetzt werden. Die geringe Schichtdicke und der geringe Querschnitt der Filterschüttung im Verhältnis zur Baugröße des Filters gewährleistet nur begrenzte Reinigung; Absetzbare, gröbere Stoffe wie Moos, Laub und Vogelkot werden bei den Filtern /2/3/5/9/10/12/ in den Filter eingetragen und verstopfen diesen vorzeitig.

Der Zulauf des Regenwassers bei den bekannten Filtern muß von oben erfolgen; Dadurch kann wegen des notwendigen Gefälles der Regenleitungen im Erdreich oft nur das Wasser aus einem Fallrohr je Filter genutzt werden; Der Filter muß aus diesem Grund in der Nähe des Fallrohres installiert werden.

Die erdverlegten Entwässerungsleitungen zwischen Fallrohren und Filter können nicht vorschriftsgerecht im frostfreien Bodenbereich verlegt werden ohne die Einbautiefe von Speicher und Filter wegen des notwendigen Fließgefälles stark zu erhöhen.

Die bekannten Regensammler /11/13/15/ zur Montage im Fallrohr ermöglichen zwar die Fassung des Regenwassers von mehreren Fallrohren und die Einleitung in einen einzigen Filterschacht bzw. direkt in ein Gebäude bei entsprechendem Gefälle ohne die Gefahr des Einfrierens. Durch die Konstruktion dieser Regensammler und den geringen Querschnitt der Ableitung gehen jedoch beträchtliche Wassermengen bei Starkregenereignissen verloren. Dadurch verschlechtert sich der Deckungsgrad und die Wirtschaftlichkeit; (Deckungsgrad = genutztes Brauchwasser/gesamtes verbrauchtes Wasser). Zusätzlich zu den vorhandenen Regenentwässerungsleitungen sind weitere Leitungen zurAbleitung des nutzbaren Regenwassers notwendig.

Dadurch entstehen Mehrkosten.

Die bekannten Speichersysteme besitzten folgende Nachteile:
Die Aufwirbelung des Bodensatzes im Speicherbehälter der in /5/8/9/10/12/16/ beschriebenen Anlagen ist unter ungünstigen Betriebsbedingungen wie geringer Wasserstand und während Starkregenereignissen möglich und führt zur Verschmutzung des entnommenen Brauchwassers.

Die Wasserentnahme während eines, Regenereignisses wird bei den genannten Systemen /5/8/9/10/12/16/ nicht berücksichtigt; Das frisch einlaufende, schmutzige Wasser durchmischt sich mit dem gespeicherten und durch Sedimentation gereinigten, schwebstoffreien Wasser. Deshalb muß in der Reinwasserleitung auf der Druckseite ein Feinfilter vorgesehen werden, der Mehrkosten verursacht, zur Verstopfung neigt und zum Nährboden für Mikroorganismen wird. Dadurch verschlechtert sich die Qualität des Reinwassers durch ständige Verkeimung dauerhaft.

Bei gering gefülltem Speicher des Systems /8/ steht nur geringer oder kein Druck zur Filtration zu Verfügung.

Die Speicher- und Filtereinheit wie in DE3825310 beschrieben, besitzt folgende Nachteile:
Speicher und Filter bilden eine Einheit. Die Filtration findet nur bei Entnahme, also nach der Speicherung statt. Sedimentierte Schmutzstoffe liegen am Speicherboden und führen zur Verkeimung und evtl. Fäulnis des überstehenden Wassers; Bei der Füllung des Speichers mischt sich der gesamte Speicherinhalt durch;
Die Wasserentnahme während eines Regenereignisses wurde nicht berücksichtigt, (Durchmischung von sedimentiertem, sauberen mit neu einlaufendem, schmutzigem Wasser).

Bei gering gefülltem Speicher steht nur geringer oder kein Druck zur Filtration zur Verfügung.

Der Filter wirkt als Oberflächenfilter und wird dadurch schnell von Schmutzstoffen zugesetzt.

Der Filter ist nicht regenerierbar oder rückspülbar.

Bei Wasserüberschuß und gefülltem Speicher läuft das überschüssige Wasser durch den Speicher hindurch und lädt dort das Sediment ab. Dadurch wird der Speicher zusätzlich mit Schmutzstoffen beladen.

Die Frosteinwirkung wurde bei diesem System nicht berücksichtigt.

Zusammenfassend läßt sich sagen, der bisherige Stand der Technik zur Nutzung von Regenwasser stellt hohe Anforderungen an den Betreiber der Anlage, wegen der häufigen und aufwendigen Reinigung der Filter und der beschränkten Wasserqualität. Eine ausreichende Wasserqualität zur Nutzung des gewonnen Brauchwassers z.B. zum Wäschewaschen kann nicht dauerhaft garantiert werden.

Die Verluste an nutzbarem Regenwasser bei der Filtration setzen den Deckungsgrad der Brauchwasserversorgung stark herab, die Anlagenkosten sind deshalb hoch im Verhältnis zum eingesparten Trinkwasser, die Bedarfsdeckung ist gering.

Die bekannten Systeme besitzen teilweise einen Überlauf zum Kanalnetz, der nicht gegen Rückstau gesichert ist.

Dies verstößt in Deutschland gegen geltende Normen (DIN 1986).

Die geringe Betriebssicherheit, der hohe Wartungsbedarf, die unsichere Wasserqualität dieser Anlagen und die nicht normgerechte Verlegung der Entwässerungsleitungen verwehren den Handwerksbetrieben des Sanitärfachs bisher, die Technik der Regenwassernutzung anzubieten.

Quellen und Bezüge:
/1/ Broschüre des Hessischen Ministerium für Umwelt und Reaktorsicherheit: "Regenwassernutzung in privaten und öffentlichen Gebäuden". Wiesbaden 1989, Deutschland.
/2/ Prospekt Fa. Wagner & Co GmbH Solartechnik, Zimmermannstr. 1, D-3550 Marburg;
/3/ Prospekt der Fa. Otto Graf GmbH, Carl-Zeiss-Str. 2-6, D-7835 Teningen;
/4/ Wolfgang Bredow: "Regenwassersammelanlage", 8. Auflage 1988, Ökobuch Verlag, Staufen/D-7800 Freiburg.
/5/ Offenlegungsschrift DE 3819330, Deutschland.
/6/ Offenlegungsschrift DE 3927042, Deutschland.
/7/ Offenlegungsschrift DE 3821633, Deutschland.
/8/ Offenlegungsschrift DE 3825310, Deutschland.
/9/ Gebrauchsmuster GM 78 27 765, Deutschland.
/10/ Gebrauchsmuster G 89 13 810.4, Deutschland.
/11/ Prospekt "Wilo-Filtersammler für die perfekte Regenwassernutzung" der Fa. Wilo GmbH, Nortkirchenstr. 100, D-4600 Dortmund 30.
/12/ Prospekt "Die Paradigma Regenwasser-Sammelanlage" der Fa. Ritter Energie- und Umwelttechnik GmbH & Co. KG, Kallhardtstr. 30, D-7530 Pforzheim.
/13/ Prospekt "Regensammler mit Füllautomatik" der Fa. Speidel Tank- und Behälterbau GmbH, Tübinger Str. 14, Postfach 28, D-7404 Ofterdingen-Tübingen.
/14/ Prospekt "Regenwassersammelschächte mit vorgeschaltetem Laub- und Sandfang" der Fa. Kießling Beton GmbH, Hauptstr. 6, D-8581 Seybottenreuth.
/15/ Prospekt "Der WISY Filtersammler" baugleich mit /11/.
/16/ Prospekt "Regenwasser nutzen" der Fa. OSNA - J. Hartlage GmbH & Co. KG, Postfach 2240, Brückenstr. 3, D4500 Osnabrück.

Die hier neu vorgestellte Anlage besitzt folgende Merkmale:
1. Filtration des Regenwassers vor der Speicherung über wartungsfreundliches Filtersystem mit einfach regenerierbarer Filtermasse ohne Verschleißteile.
2. Sedimentation von Schmutzstoffen vor der Filtration.
3. Filtration ohne Verlust an Fließhöhe durch variablen Überstau des Filters und Zunahme der wirksamen Filterfläche in Abhängigkeit des Flusses.
4. Optimales Verhältnis von Filterleistung und Baugröße des Filters durch koaxiale, rotationssymmetrische Bauweise.
5. Geringer Wartungs- und Reinigungsbedarfdes Filtersystems durch hohe Rückhaltekapazität bei kompakter Bauweise.
6. Geringer Filterwiderstand bei hoher Reinigungsleistung.
7. Frostsichere und vorschriftsgerechte Verlegung der Zuleitungen im Erdreich zum Filter ist möglich, ohne daß der maximale Füllstand im Speicherbehälter dadurch erniedrigt wird.
8. Sicherer Winterbetrieb.
9. Der Anschluß mehrerer Dachflächen und weit auseinanderliegender Fallrohre an eine einzige Filtereinheit ist möglich.
10. Kein Verlust an Rohwasser durch überlastete oder verstopfte Filter, dadurch maximaler Deckungsgrad und hohe Wirtschaftlichkeit.
11. Anpassung der Filterleistung an unterschiedlichen Bedarf durch Kombination mehrerer Standard-Filterelemente in Modulbauweise in einem Filtergehäuse.
12. Strömungsführung und Schichtung des Reinwassers im Speicherbehälter, dadurch Abscheidung von Trübstoffen, die durch Filtration nicht entfernt werden konnten.
13. Vollständige Entfernung von Schwebstoffen mittels Sedimentation durch Trennung von frisch einlaufendem und älterem, gespeicherten Wasser im Speicherbehälter; ständiger Vorrat an triibstofffreiem Wasser, dadurch Gewährleistung gleichbleibend hoher Wasserqualität.
14. Keine weiteren Feinfilter in der Druckleitung notwendig.
15. Selbsttätige Begrenzung des maximalen Füllstands im System in Abhängigkeit der Bodentemperatur; dadurch Erhöhung des Speichervolumens in der frostfreien Zeit.
16. Rückstaugesicherter Anschluß des Überlaufs an die Kanalisation, dadurch Erfüllung der DIN 1986 (Deutschland).
17. Sicherung des Speicherbehälters gegen Auftrieb in Grund- und Stauwasser.
18. Spezielle Rohr- und Leitungsdurchführungen für Gebäude und Behälterwände.
19. Biologische Fixierung von Schadstoffen und Nährstoffen im Bodensediment.
20. Entkeimung des Wassers durch UV Bestrahlung und Ozonentwicklung.
21. Schneller und kostengünstiger Einbau des Systems auf der Baustelle durch kompakte Bauweise mit anschlußfertigen Komponenten.

### Funktionsweise der Anlage:

### 1. Filtersystem

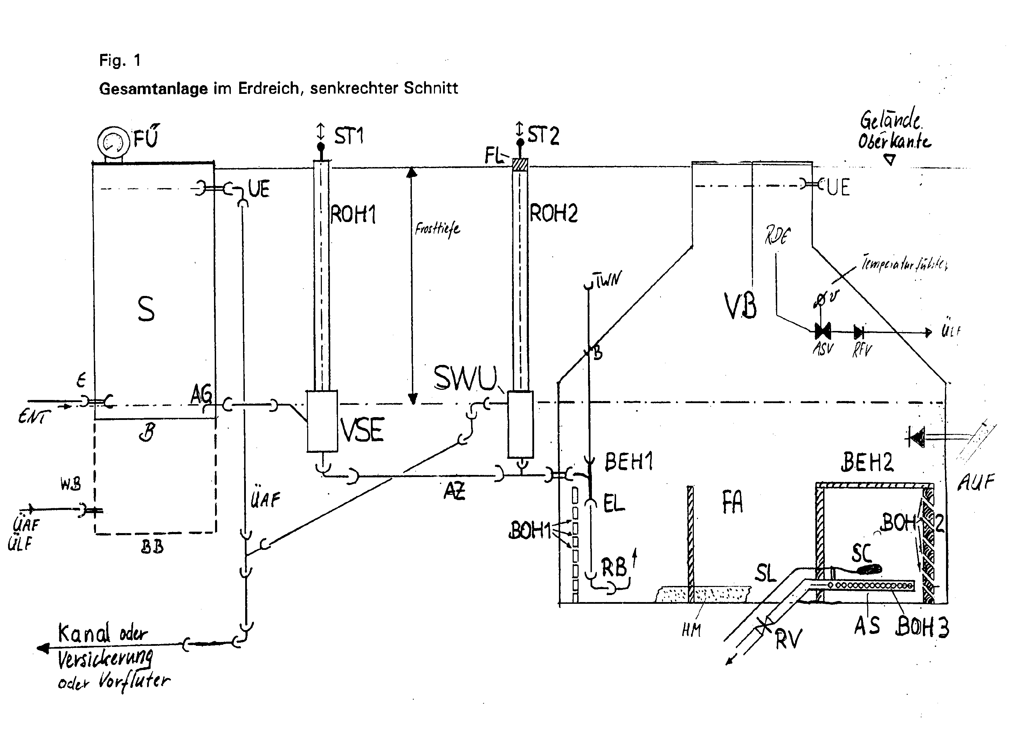

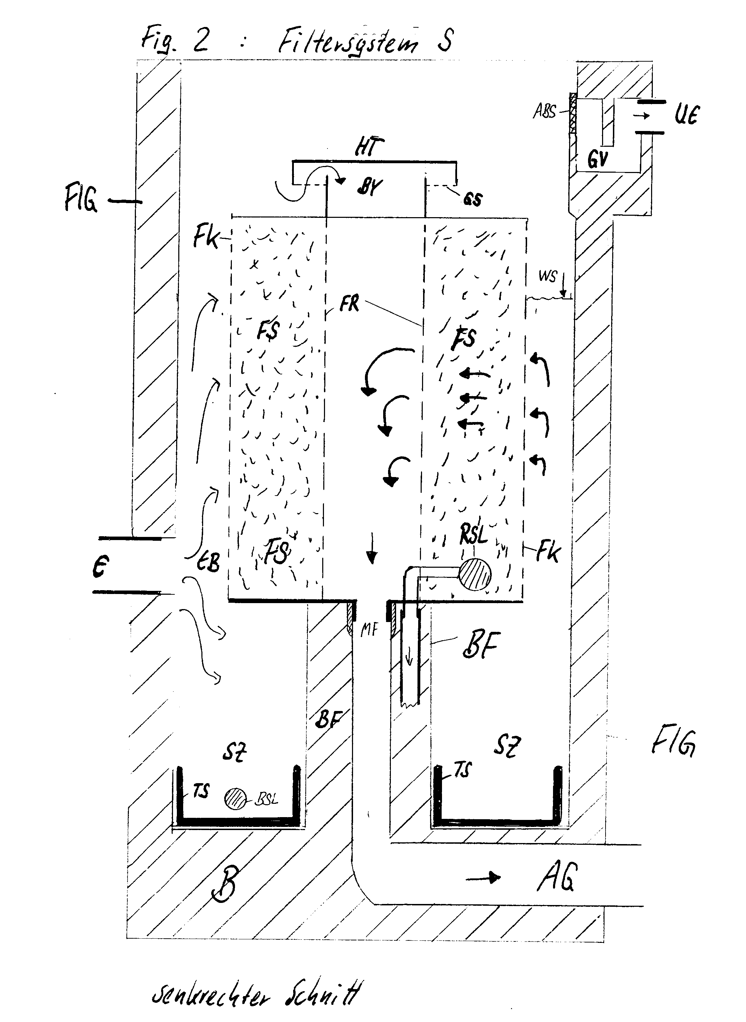

Das Regenwasser strömt gemäß Fig. 1 von den normgerecht in frostsicherer Tiefe verlegten Entwässerungsleitungen (ENT) im unteren Bereich durch mehrere Einlaufanschlüsse (z.B. KG Steckmuffen) in das Filtersystem (S) nach Fig. 2 ein, die Strömungsgeschwindigkeit verringert sich in einer Sedimentationszone (SZ), grobe Schmutzteilchen sedimentieren in einer eingesetzten, herausnehmbaren Bodentasse (TS) die aus dem Boden (B) des Filtergehäuses (FIG) steht, das Wasser strömt dann zwischen den Gehäusewänden (FIG) und den koaxialen, zylindrisch ausgebildeten perforierten Wänden des Filterkorbs (FK) hoch, durch die Perforation des Filterkorbs FK hindurch senkrecht zum Filterkorb durch eine Filtermasse (FS), dann über das innere perforierte Rohr (FR) zum Abgang (AG). Bei Starkregenereignissen strömt das Wasser über den Bypass (BY) an der Filterschüttung vorbei direkt zum Abgang (AG), wobei Schwimmstoffe wie Pollen durch den als Tauchhülse ausgebildeten Hut (HT) am Abfließen gehindert werden. Grobe Stoffe werden durch ein steckbares Grobsieb (GS) zurückgehalten.

Dieser Bypass (BY) trägt der Tatsache Rechnung, daß es bei wirtschaftlich vernünftigen Dimensionierungen des Filters nicht möglich ist, Starkregenabflüsse vollständig durch ein Filter zu leiten. Versuch haben gezeigt, daß es darüber hinaus nicht notwendig ist, diese Starkregenabflüsse zu filtrieren, da sie keine relevante Schmutzfracht tragen, weil die auf den Dachflächen liegende atmosphärische Trockendeposition bis zum Erreichen des Spitzenabflusses schon abgespült worden ist. In Anhängigkeit des Flusses kann das Rohwasser also bei extrem starken Regenereignissen ohne Verluste direkt in den Speicherbehälter (VB) gelangen. Der Filterkorb (FK) kann auch mit vieleckigem Querschnitt ausgeführt werden, z. B. in Form eines Faltenfilters um die Oberfläche noch zu vergrößern. Ebenso sind parallele Filterwände möglich. An Stelle des Rohres (FR) tritt dann eine zweite zur Filterwand (FK) parallele Filterwand. Der Filterkorb kann steckbar in einer konischen oder zylindrischen Muffe (MF) befestigt sein, wobei die bekannten Abdichtungen von handelsüblichen Kanalrohren zur Anwendung kommen können. Ebenso ist eine flachdichtende Ausführung möglich, bei der der Korb auf dem Sockel (BF) zuliegen kommt, ggf. mit einer zwischengelegten elastischen Dichtung.

Die Konstruktion des Filtersystems ergibt sich aus der Tatsache, daß Abflüsse mit unregelmäßiger Verteilung und Abflußspitzen durch Gewitterregen simultan gereinigt werden müssen. Dies ist nur über ein Tiefenfilter zu realisieren, das eine hohe Schmutzfracht bei geringem Filterwiderstand aufnehmen kann, ohne zu verstopfen. Oberflächenfilter wie Feinsiebe scheiden aus, weil sie bereits durch ein einziges Regenereignis verstopft werden können. Die Vorschaltung einer Sedimentationszone (SZ) vor den eigentlichen Filter, hält schnell sedimentierbare Stoffe, die einen Hauptteil der gesamten Schmutzfracht ausmachen, aus dem Filter fern, so daß sich lange Reinigungsintervalle und Standzeiten des Filters ergeben. Durch die koaxiale- zylindrische Bauweise der Filtereinheit ergeben sich günstige Verhältnisse zwischen Filterleistung und Baugröße. Versuche haben gezeigt, daß eine hohe Filtrationsleistung entscheidend durch den durchströmten Querschnitt der Filterschüttung FS gesteuert wird, nicht so sehr durch die Schichtdicke von (FS). Durch die koaxiale Anordnung wird eine hohe Mantelfläche der Filterschüttung erzielt, entsprechend einem großen durchströmten Querschnitt, bei gleichzeitig geringem Filterwiderstand. Durch faltenförmige Ausbildung der senkrechten perforierten Wände des Filterkorbs (FR) und (FK) läßt sich die Mantelfläche weiter vergrößern, bei gleicher Baugröße der Filterkammer (FIG).

Die Filterschüttung (FS) besteht aus körnigem, gerundetem oder scharf gebrochenem Material. Zur Anwendung kommt Tonganulat, Blähtonsplitt, Ziegelbruch, vulkanische oder industrielle Schlacken, Bims- oder Tuffstein, Naturgesteins-Splitt oder -Kies, Kunststoffgranulat, Aktiv- oder Holzkohle, Holz oder Rinde. Dabei kann die Abgabe von bioziden Substanzen etwa aus Rinde oder Holz ein Wachstum von Mikroorganismen beschränken.

Das Wasser wird bei Durchlaufen des Reinigungsschachtes in der Reihenfolge Sedimentation in der Zone (SZ), Siebung durch den Filterkorb (FK) und Tiefenfiltration in der Schüttung (FS) gereinigt; Am Filterkorn der Filtermasse (FS) werden Partikel und Schwebstoffe adsorbiert; Dadurch können Feinstoffe zurückgehalten werden, die kleiner sind als die Porenweite des Filters ohne dabei den Filterwiderstand durch Verstopfen der Poren zu erhöhen. Versuche haben gezeigt, daß sich mit zunehmender Filterstandzeit auf dem Filterkorn Häutchen ausbilden, durch die Anlagerung von feinsten Schmutzstoffen; Diese Häutchen lösen sich bei Bewegen und Spülen des Filterkorns in großen Flocken ab, und sind dadurch schnell sedimentierbar; Dadurch ist die Filterschüttung schnell und preisgünstig regenerierbar durch Rückspülung oder Herausnehmen und Abspritzen der Filterschüttung mit Wasser. Das z.B. von den Regenfallrohren kommende Ablaufwasser staut sich je nach Abflussintensität in den Zulaufleitungen bis zur Höhe des Bypasses (BY) auf. Diese hydrostatische Druckhöhe wird zur Überwindung des Filterwiderstandes genutzt.

Der wirksame Filterquerschnitt paßt sich deshalb dem Volumenstrom des einlaufenden Wassers an: Mit steigendem Durchfluß und steigendem Filterwiderstand steigt der Wasserspiegel (WS) im Einlaufbereich (EB) an, und dadurch auch der durchflossene Filterquerschnitt. Durch den variablen Überstau in den Zulaufleitungen steht ein ausreichender Druck zur Filtration zur Verfügung, bei frostsicherer, normgerechter Verlegung der Zuleitungen und einem Ruhewasserstand unter Frosttiefe, ohne daß Füllhöhe im Speicher (VB) verloren geht. Bei Überstau des Filterkorbs (FK) während eines Regenereignisses übersteigt der Wasserstand in den Zulaufleitungen zwar die frostfreie Tiefe; Zum Überstau führen jedoch nur Starkregenereignisse, die erfahrungsgemäß bei Bodenfrost nicht auftreten können; Die Frostsicherheit ist dadurch zu jeder Jahreszeit gewährleistet.

Der Filterkorb (FK) ist steckbar oder mit Gewinde oder mit Bajonettverschluß in einer Muffe (MF) befestigt, so daß zur Reinigung der Filterschüttung (FS) der ganze Filterkorb herausgenommen und entleert werden kann. Die Rohranschlüsse des Filtergehäuses sind als Steckmuffen oder Rohrnippel-Steckenden ausgebildet, so daß konventionelle Entwässerungsleitungen genormter Nennweiten durch Einstecken sofort angeschlossen werden können.

Die Körngrößenverteilung der Filterschüttung kann mit der Höhe variieren, zur Erzielung einer gleichmäßigen Filtergeschwindigkeit;

Im Bodenbereich unterhalb der Filterschüttung kann eine Rohrleitung (RSL) zur Rückspülung der Filterschüttung angeordnet werden; Der Einlauf dieser Rückspülleitung (RSL) kann nach oben in den Bereich (BY) herausgeführt und mit einem Verschraubungsflansch versehen werden oder steckbar im Sockel (BF) angeschlossen sein. Zur Rückspülung wird dort mit einem Schlauch oder über eine ortsfeste Rohrleitung Wasser eingespeist. Im Überlauf (UE) befindet sich ein herausnehmbares Absperrgitter (ABS) zum Schutz gegen aus dem Kanalsystem eindringende Tiere. Die Höhe des Überlaufs (UE) liegt über der Rückstauebene der Kanalisation und bestimmt den maximal im System auftretenden Füllstand in der frostfreien Zeit.Der Filterkorb (FK) sitzt entweder auf einem Sockel (BF) mit integrierter Ablaufleitung oder sitzt auf (nicht gezeichneten) Standfüssen auf dem Schachtboden (B), oder bildet eine Baueinheit mit der Bodentasse (TS), oder liegt auf seitlich ausragenden (nicht gezeichneten) Vorsprüngen des Filtergehäuses auf.. Das Filterrohr FR kann geschlitzt, oder mit Bohrungen versehen sein (z.B. Brunnenrohr aus Kunststoff) oder aus einem Drahtgeflecht bestehen; Zur Entfernung des abgesetzten Schlammes in der Sedimentationszone (SZ) kann im Bodenbereich eine Spülleitung (BSL) mit Düsen zur Aufwirbelung des Bodensatzes vorgesehen werden. Diese Bodenspülleitung (BSL) kann mit der Rückspülleitung (RSL) kombiniert werden. Die Bodenspüleinrichtung kommt besonders dann zur Anwendung wenn keine herausnehmbare Bodentasse vorgesehen wird, bzw. wenn mehrere Filterkörbe (FK) parallel in einem gemeinsamen Filtergehäuse montiert sind.

Der Hauptanteil der im Filter abgelagerten Stoffe wird in den ersten Zentimetern der Filterschüttung nahe der äußeren Oberfläche (Mantelfläche des Filterkorbes FK) festgehalten; Die Standzeit des Filters hängt deshalb vorwiegend von der Größe der Mantelfläche ab des Filterkorbes FK ab.

Der Filterwiderstand kann zur Steuerung der Rückspülung oder Anzeige des Reinigungsintervalls kontrolliert werden durch Messung der Überstauhöhe (WS) im Einlaufbereich (EB), mittels mechanischer, elektrischer oder elektronischer Geräte. Anstelle der Messung des Überstaus können auch die Überstauereignisse gezählt werden und zur Steuerung einer selbsttätigen Rückspülung herangezogen werden. Zur pneumatisch/elektrischen Füllstandskontrolle können insbesondere preisgünstige konventionelle Füllstandsschalter verwendet werden, wie sie in Wasch- und Geschirrspülmaschinen zur Anwendung kommen.

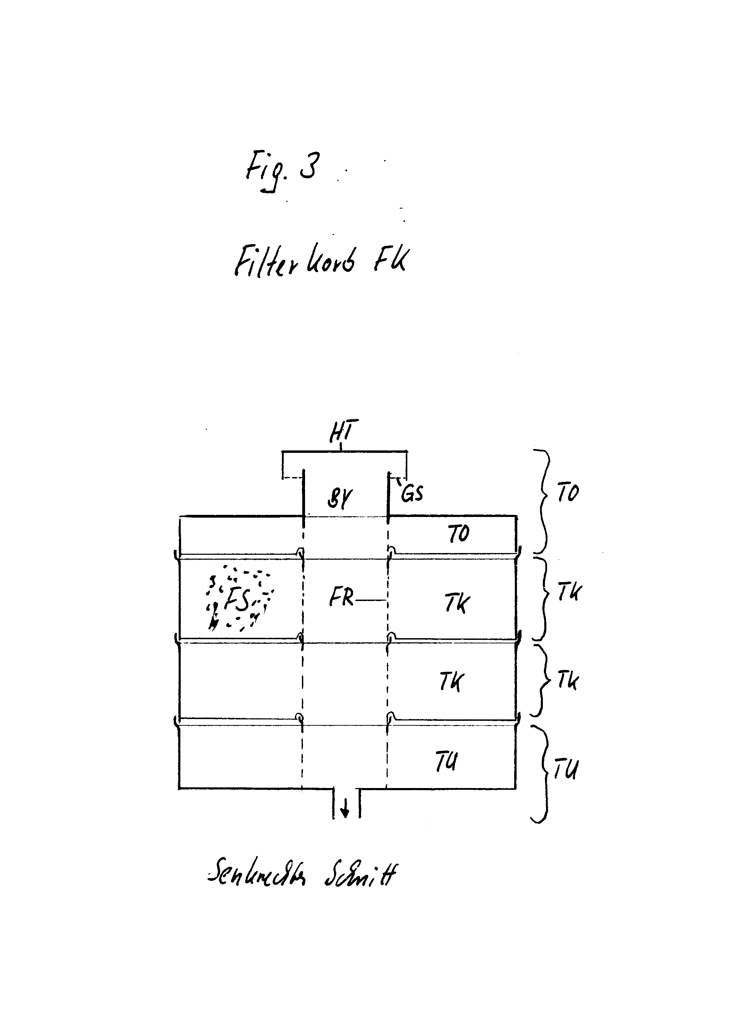

Der Filterkorb (FK) und das Filterrohr (FR) können z.B. kostengünstig hergestellt werden aus Brunnenrohren oder Edelstahllochblechen (zur Herstellung von Waschmaschinentrommeln), oder aus dem Mantelteil von Waschmaschinentrommeln. Insbesondere können für die Herstellung des Filterkorbs die selben Fertigungseinrichtungen wie für die Herstellung von Waschmaschinentrommeln zum Einsatz kommen: Für den Selberbauer und Handwerker kommt auch die Verwendung von 2 oder 3 gebrauchten, ausgedienten Waschmaschinentrommeln aus Frontladern in Betracht, die aufeinandergesetzt und miteinander durch Nieten, Löten oder Schweißen verbunden werden. Verschiedene Filtergrößen können bei Serienfertigung kostengünstig durch Kombination der standardisierten und ineinandersteckbaren Bauteile (TO), (TK) und (TU) gemäß Fig. 3 zusammengestellt werden.

Dadurch sinken die Herstellkosten in der Serienfertigung. Das Filtergehäuse (FIG) kann kostengünstig aus Beton oder Kunststoff hergestellt werden; Die Rohreinführungsmuffen werden entweder schon bei der Herstellung der Fertigteile miteingegossen, oderes werden die entsprechenden Durchbrüche vorgesehen und die Muffen werden nachträglich auf der Baustelle eingebaut.

Das Filtersystem kann insbesondere als eine Baueinheit anschlußfertig mit allen Anschlüssen und Rohrleitungen gefertigt werden. Dabei können Filtersystem (S) und Speicherbehälter (VB) auch eine Baueinheit bilden, die auf der Baustelle nur noch in die Baugrube abgesenkt werden muß. Durch parallele Anordnung von mehreren Filterkörben in einem gemeinsamen Filtergehäuse kann die Filterleistung an den Bedarf angepaßt werden. Die hydraulischen Verhältnisse bleiben dabei erhalten; Bei der Filterbemessung steigt lediglich die Anzahl der Filterkörbe linear mit der Fläche der entwässerten Fläche Dadurch werden die Herstellkosten für den Filterkorb durch Produktion hoher Stückzahlen gleicher Bauart und Größe gesenkt.

Zur Reinigung der Filterschüttung mittels Rückspülung wird die Verschlußeinrichtung (VSE) und über die Leitung (RSL) bzw. (BSL) wird Spülwasser eingespritzt.

### 2. Verschlußeinrichtung (VSE) in der Überleitung zur Zisterne (AZ)

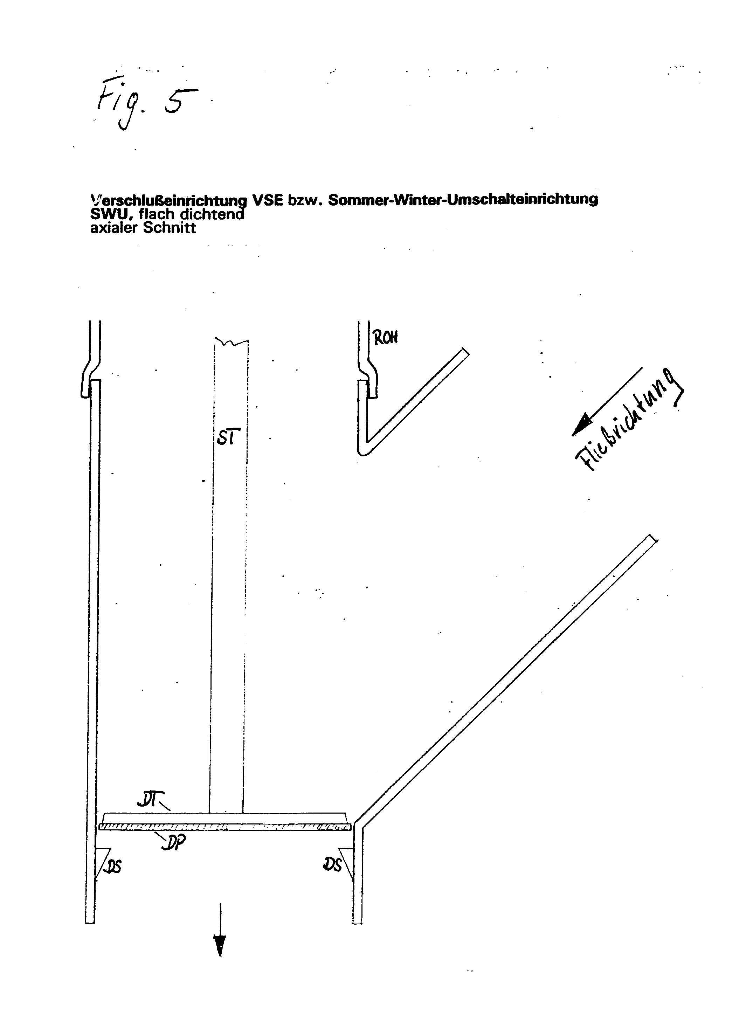

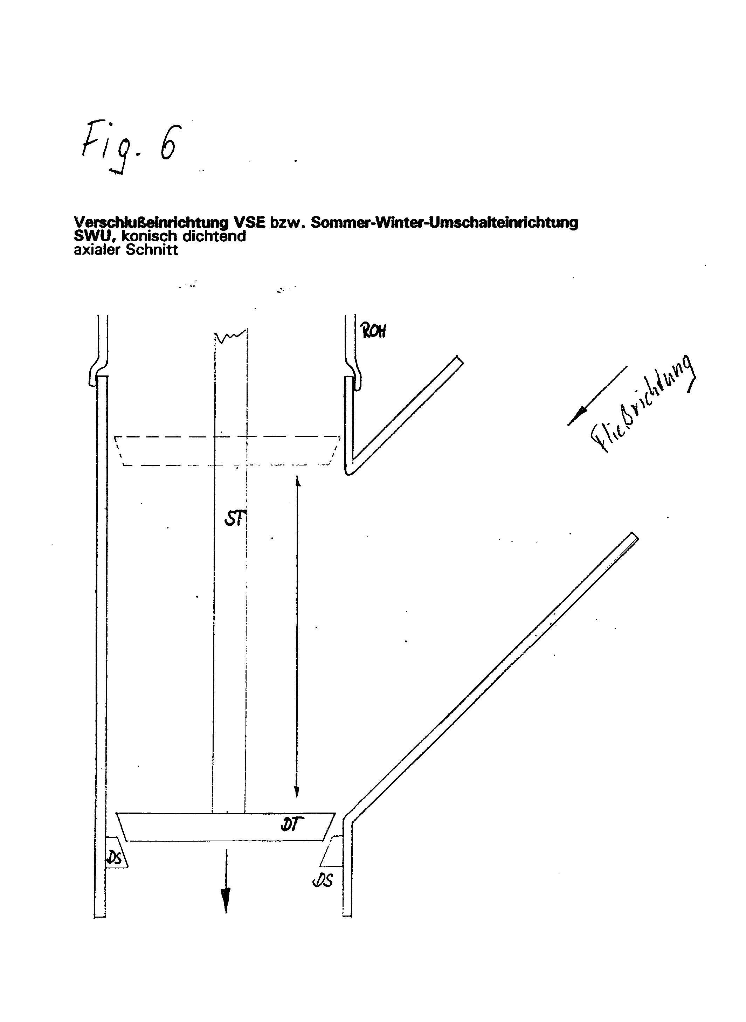

Diese Verschlußeinrichtung dient zum Verschluß der Zulaufleitung zur Zisterne , während der Reinigung des Filtersystems (S) durch Rückspülung, oder um mit Schadstoffen kontaminierten Regen aus dem Speicher fernzuhalten. Im geöffneten Zustand wird gemäß Fig. 5 oder 6 das Dichtelement in vollem Umfang aus dem durchflossenen Rohrquerschnitt herausgeführt; Dadurch ergibt sich ein geringer Druckverlust in der Verschlußeinrichtung. Die Verschlußeinrichtung kann kostengünstig hergestellt werden durch Verwenden eines handelsüblichen Abweigstückes für Entwässerungsrohre (KG oder HT Rohre); In das Abzweigstück wird lediglich der Dichtungssitz (DS) eingepreßt, geklebt oder geschweißt. Die Dichtung kann flachdichtend ausgeführt sein wie in Fig. 5 oder konisch dichtend wie in Fig. 6 dargestellt. Die Steuerungsstange (ST1) wird durch ein handelsübliches Entwässerungsrohr nach oben geführt und mündet im ebenfalls aus handelsüblichen Formteilen hergestellten Kopfstück, (HT-Muffenstopfen). Die Steuerstange (ST) wird gehalten von einer im Kopfstück (HT-Muffenstopfen) eingebauten handelsüblichen PG-Kabelzugentlastung. Der Reibungswiderstand der Steuerstange kann durch den Pressdruck der Kabelverschraubung reguliert werden. Die Verschlußeinheit kann als Baueinheit mit dem Filtersystem (S) hergestellt werden.

### 3. Sommer-/Winter-Umschalteinrichtung (SWU)

Durch die Verschlußeinrichtung kann der Wasserstand während der frostfreien Zeit im Vorratsbehälter (VB) bis nahe an die Geländeoberkante geführt werden kann. Als Überlauf wirkt dann der Abgang (UE) im Filtergehäuse (FIG). Während der Frostperiode wird der Wasserstand im System durch Öffnung von (SWU) unter die maximale Frosteindringtiefe abgesenkt. Die Konstruktion ist gleichartig wie bei Verschlußeinrichtung (VSE); Die Einrichtung wird im Erdreich eingebaut und kann von oben mit der Steuerstange (ST2) betätigt werden;

Durch diese Einrichtung wird Rückstau aus dem Kanalnetz in den Speicher verhindert, da in geschlossenem Zustand die mögliche Rückstauhöhe durch die Einbauhöhe des Abgangs (UE) im Filtergehäuse (FIG) begrenzt wird. Rückstaubildende Regenereignisse kommen erfahrungsgemäß nur in der frostfreien Zeit vor, so daß die Einrichtung (SWU) bei Rückstau geschlossen ist. Die Einrichtung wird entweder manuell betätigt oder fremdgesteuert z.B. durch ein Dehnstoffelement.

### 4. Mauer- und Behälterdurchführung

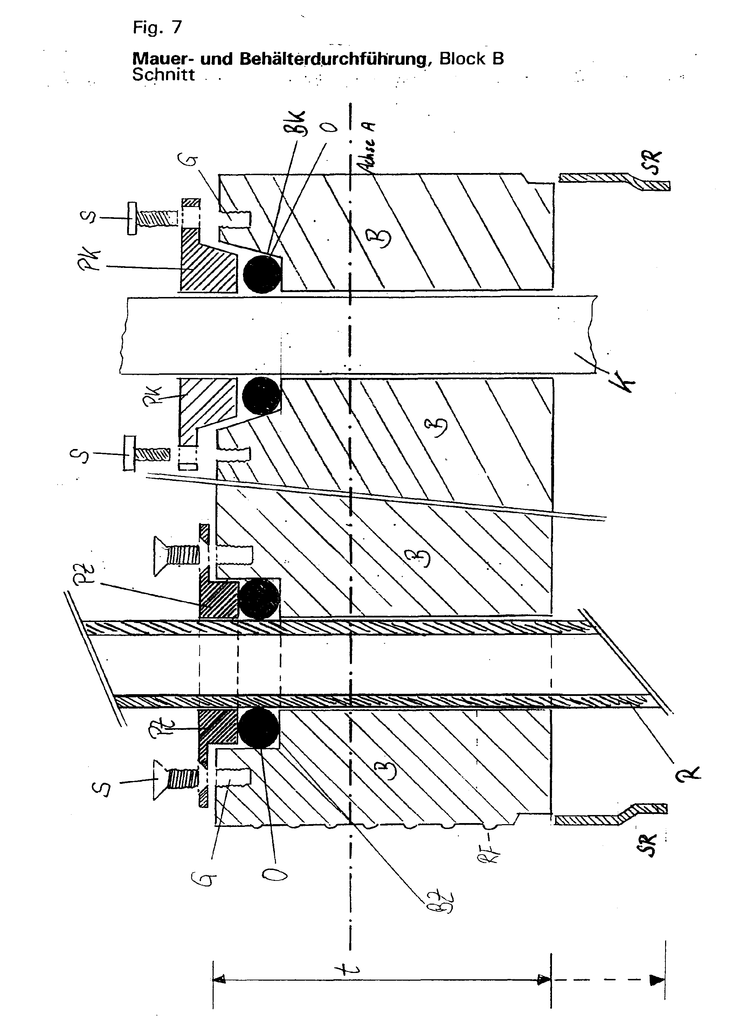

Die Mauer- und Behälterdurchführung nach Fig. 7 ermöglicht die kostengünstige, druckdichte Einführung von mehreren Rohrleitungen oder Kabeln durch einen einzigen Mauer- oder Behälterdurchbruch. Bei Kunststoff- oder Betonbehältern kann der Block B bei der Herstellung des Behälters mitintegriert werden. Nicht Benötigte Durchführungen innerhalb des Blockes B können durch eine Blindplatte verschlossen werden. Durch Aufstecken von Verlängerungsstücken (SR) auf den Block (B) können verschiedene Wandstärken (t) überbrücktwerden.

Der Vorteil dieser Mauer- und Behälterdurchführung liegt darin, daß die Saugleitung, der Trinkwassernachlauf in den Speicherbehälter, die elektrischen Steuerleitungen und die Hauseinführung des Trinkwasserhausanschlusses mit einem einzigen Durchbruch durch die Gebäude- und Behälterwand geführt werden.

Der Anwendungsbereich dieser Durchführung ist nicht auf die Nutzung von Regenwasser beschränkt. Fernmelde-, Elektro-, Gas-, Öl-, Wasser- und Fernwärmeleitungen können durch eine einzige Mauerdurchführung gelegt werden.

### 5. Speicherbehälter (VB)

Über die Leitung (EL) läuft das filtrierte Wasser über einen Rohrkrümmer (RB) in die oben offene Einlaufkammer (BEH1). Durch die der Speicherbehälterwand zugewandten Bohrungen (BOH1) verläßt das Wasser die Einlaufkammer bei niedrigem Wasserstand. Je nach Füllstand im Speicherbehälter (VB) strömt das einlaufende Wasser nach oben aus der Kammer (BEH1) heraus und schichtet sich durch die wärmere Temperatur oben in den Vorrartsbehälter ein, oder bei Füllständen unterhalb der Bauhöhe der Kammer (BEH1), strömt das einlaufende Wasser durch die Bohrungen (BOH1) verzögert und mit geringerer kinetischer Energie in den Vorrartsbehälter. Durch die Bemessung des Durchmessers der Bohrungen (BOH1) tritt in der Einlaufkammer (BEH1) ein Überstau und eine Beruhigung des neu einfließenden Wassers ein. Im Bodenbereich von (BEH1) können Sinkstoffe sedimentieren.

Dies trägt der Tatsache Rechnung, daß Schwebstoffe im Wasser gelöste Schadstoffe sorbieren, und diese dann durch die Sedimentation der Schwebstoffe aus dem Wasserüberstand eliminiert werden.

Durch die Bohrungen (BOH2) gelangt das Wasser in die oben geschlossene Entnahmekammer (BEH2) und durch den Ansaugstutzen (ASZ) oder eine nicht gezeichnete in der Entnahmekammer montierte Tauchpumpe in die Entnahmeleitung (SL).

Durch die gewählte Strömungsführung wird eine stabile Schichtung im Speicherbehälter erreicht und Durchmischung vermieden. In der Kammer (BEH2) befindet sich immer ein Vorrat an durch Sedimentation gereinigtem Wasser, das sich nicht mit neu einlaufendem Wasser mischt. Dadurch wird in allen Betriebssitationen (auch während Regenereignissen) hochwertige schwebstoffreie Wasserqualität erzielt, die eine nachfolgende Feinfiltration erübrigt.

Die Öffnungen (BOH2) sind gemäß Fig. 1 so ausgeführt, daß sie eine Barriere gegen Schwimmstoffe bilden, von innen nach außen fallend. In der Entnahmekammer (BEH2 befindet sich ein elektrischer Schwimmerschlater (SC) oder eine andere Füllstandmeßeinrichtung, deren Schaltzustand von der zentralen Steuerung (ZS) erfasst wird. Die Kammern (BEH1) und (BEH2) können z.B. kostengünstig aus handelsüblichen Betonkanalrohren hergestellt werden, die senkrecht in ein Mörtelbett gestellt werden. (BEH2) wird durch einen aufgelegten Deckel verschlossen. Anstatt der eingestellten Betonrohre können die Kammern (BEH) auch durch sinngemäß ausgeführte Innenwände des Vorratsbehälters erstetz werden. In der Entnahmekammer kann eine Ultraviolettlichtquelle zur Reduktion des Wachstums von Mikroorganismen vorgesehen werden. Diese Lichtquelle wird verbrauchsabhängig gesteuert von der zentralen Steuerung (ZS).

Der Speicherbehälter kann kostengünstig Beton oder Kunststoff gergestellt werden und eine Baueinheit mit den Kammern (BEH) und dem Filtersystem (S) bilden.

Alle Leitungen aus oder in den Speicherbehälter können durch eine einzigen Durchbruch mit der unter Punkt 4. beschriebenen Mauerdurchführung geführt werden.

Die ausgeführte Einlaufleitung zur Nachspeisung von Trinkwasser mündet in das Einlaufrohr (EL) um eine Aufwirbelung von Bodensatz zu verhindern.

### 6. Füllstandsregulierung (ASV) und Rückstausicherung (RFV)

Der Speicherbehälter ist altenativ zur Sommer-Winterumschalteinrichtung (SWU) mit einer Überlaufleitung (ÜLF) geringen Durchmessers versehen, die über ein handelsübliches preisgünstges Rückstauventil für Trinkwasser und ggf. über ein manuelles oder fernthermostatisch betätigtes Ventil (ASV) mit dem Inneraum des Speicherbehälter verbunden ist. Das Ventil (ASV) wird in Abhängigkeit von Bodenfrost automatisch über eine Temperaturfernfühler oder manuell betätigt. Der Fernfühler des Thermostatventils wird auf derAu ßenseite des Speicherbehälter oder des Filtersystems (S) angebracht. Bei Bodenfrost öffnet das Ventil und der Wasserstand im System wird abgesenkt. Dabei bestimmt die Einbauhöhe der Öffnung (RDE) am Rohrende den unteren maximalen Füllstand. Diese wird so gewählt, daß sie mindestens auf gleicher Höhe oder unterhalb der Frosteindringtiefe liegt. Bei offenem Ventil (ASV), vollem Speicherbehälter und gleichzeitig auftretenden Niederschlägen steigt der Wasserstand im Speicherbehälter temporär über die frostfreie Tiefe an. Die Anlage einschließlich der Zuleitungen ist aber zu diesem Zeitpunkt wegen der Niederschläge nicht einfriergefährdet. Nach Ende der Niederschläge läuft der Speicherbehälter bis zum erreichen des sollfüllstandes verzögert über die Leitung (ÜLF) leer. Dadurch kann die Leitung (ÜLF) einen im vgl. zum Überlauf (UE) viel geringeren Querschnitt bekommen. Dadurch kann die Anordnung unter Verwendung kostengünstiger handelsüblicher Thermostatventile und Rückflußverhinderer für Trinkwasser mit geringer Nennweite hergestellt werden. Bei Verzicht auf das Ventil (ASV) kann der Füllstand manuell über ein am flexiblen Rohrende (RDE) befestigtes Seil mit Gewicht eingestellt werden. Das Seil wird in diesem Fall nach oben aus dem Speicherbehälter herausgeführt und das Gewicht zieht bei Nachlassen des Seils das Rohrende (RDE) nach unten. Das Leitungsstück zwischen Rohrende (RDE) und Rückflußverhinderer wird dannn zweckmäßigerweise als flexibler Schlauch ausgeführt.

### 7. Auftriebsicherung (AUF)

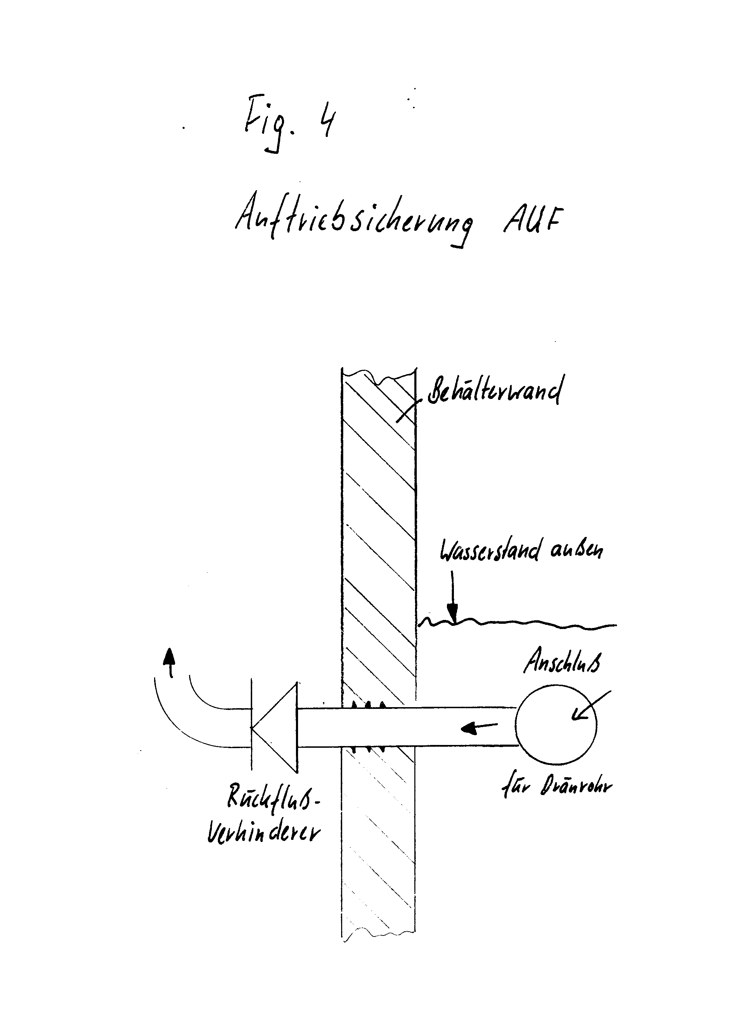

Die Auftriebsicherung (AUF) nach Fig. 1 und 4 besteht aus einem Rohrstück mit Anschlußstücken für handelsübliches Dränrohr und einem handelsüblichen Rückflußverhinderer. Übersteigt der Wasserstand außerhalb des Speicherbehälter die vorgegebene Höhe so kann bei leerem Speicherbehälter Wasser zum Ausgleich des Auftriebs in den Speicherbehälter fließen und ein Aufschwimmen des Speicherbehälter verhindern. Die Auftriebsicherung kann auch im Boden des Speicherbehälter integriert sein, wobei das Dränrohr durch eine Siebplatte ersetzt werden kann, die das Eindringen von Sand, Kies oder Erde in die Anordnung verhindert. Die kritische Höhe wird dann über die Höhe eines vom Rückflußverhinderer im Speicherbehälter nach oben geführtes Rohr bestimmt. Diese Form der Auftriebsicherung stellt eine preisgünstige Sicherung dar, ohne den Speicherbehälter mit Gewichten beschweren zu müssen.

### 8. Biologische Eliminierung von Schad- und Nährstoffen (HM)

Auf dem Boden des Speicherbehälters kann gemäß Fig. 1 eine Schicht aus Boden oder Lehm (HM) aufgebracht werden, die mit Lumbriciden und oder Nematoden beimpft sein kann. Diese Tiere leben am Grund des Speicherbehälter und fressen den aus feinen Schwebstoffen bestehenden abgelagerten Schlamm. Dabei wird der Schlamm mit Boden vermischt und durch die Ausscheidung in den Bodenkörper eingearbeitet. Bei der Verdauung werden stabile Ton-Humus-Komplexe gebildet, die nur sehr langsam abgebaut werden. Auf diese Weise werden der mit dem Wasserkörper in Verbindung stehenden Schlammschicht Nähr- und Schadstoffe entzogen und in der Bodenschicht fixiert. Die im Regenwasser enthaltenen Schadstoffe adsorbieren an feine Partikel und sedimentieren mit diesen. Auf diese Weise wird die Qualität des Reinwassers erhöht. Bei nicht beimpftem Boden entwickeln sich nach geraumer Zeit aus natürlicherweise vorhandenen Eiern entsprechende Organismen, die Beimpfung des Bodens beschleunigt lediglich deren Ansiedlung.

### 9. Steuerung (ZS)

Von einer zentralen Steuerung wird der Füllstand in der Kammer (BEH2) erfaßt und bei unterschreiten eines festgelegten Mindestwasserstandes die Förderpumpe abgeschaltet. Ober einen Schwimmschalter oder eine andere Einrichtung zur Füllstandsmessung wird der Wasserstand im freien Bereich (FA) des Speicherbehälters kontrolliert und danach der Trinkwassernachlauf über ein Magnetventil gesteuert. Durch Messung der Pumpenlaufzeit wird die geförderte Brauchwassermenge abgeschätzt und danach die ggf. in der Entnahmekammer (BEH2) vorhandene UV-Lampe sowie die automatische Rückspülung des Filtersystems (S) gesteuert. Der Wasserdruck auf der Druckseite der Pumpe wird über einen elektropneumatischen Schalter durch Steuerung der Pumpe geregelt.

### 10. Einrichtung zur Versickerung des Überlaufwassers

Das Filtergehäuse kann wie in Fig. 1 gezeigt nach unten verlängert werden um anfallendes Überschußwasser und ggf. Drainagewasser aufzunehmen. Das Filtergehäuse mit den Wänden (WB) und dem Boden (BB) dient in diesem Fall der Erzielung einer vergrößerten Kontaktfläche mit der das Filtergehäuse und den Speicherbehälter umgebenden Kiesschüttung, um bei leitfähigem Untergrund eine problemlose Versickerung zu gewährleisten.

Das Filtersystem kann als separate Einheit zur Reinigung von Regenabfluss von versiegelten Flächen genutzt werden, das dann gereinigt der Versickerung oder einem Vorfluter zugeführt werden kann.

### 11. Montageeinheit Steuer- und Regeltechnik.

Durch die Herstellung einer fertig auf einen Rahmen oder eine Platte montierten Montageeinheit bestehend aus Steuerung mit Verkabelung, Absperrventilen, Verschraubungen, Rohrleitungen, Membrandruckbehälter, Membrandruckschalter, Magnetventil für Trinkwassernachlauf, freier Trinkwassereinlauf in Nachspeiseleitung, Wasserzähler für Regen- und Trinkwasservertbrauch und ggf. einer Förderpumpe zur Montage in Gebäuden ist eine schnelle Montage auf der Baustelle möglich.

Der Scheitelabflußwert eines Gebäudes mit einer Anlage zur Regenwassernutzung wie hier beschrieben, ist erheblich geringer als bei konventioneller Entwässerung. Dadurch können Kanalquerschnitte, Regenwasserrückhalte-oder Behandlungsbecken verkleinert werden. Wird das Überschußwasserversickert oder einem Obertflächengewässer zugeführt, kann das Kanalnetz erheblich kostengünstiger hergestellt werden.

Kläranlagen sind in der Regel auf den zweifachen Trockenwetterabfluß ausgelegt. Schon geringe Regenintensitäten führen zur Überschreitung dieses Wertes. Die den zweifachen Trockenwetterabfluß übersteigende Abwasserfracht wird über Regenüberläufe an der Kläranlage vorbei in die Vorfluter geleitet. Diese Überlaufeinleitung stellt einen wichtigen Gewässerverschmutzer dar. Das Fernhalten von Oberflächenabflüssen von versiegelten Flächen aus dem Abwasserkanalnetz stellt die einzige Möglichkeit dar, diese Belastung des Vorfluters zu verhindern.

Die dezentrale Nutzung von Regenwasser von versiegeiten Flächen und die Versickerung des Überschußwassers leisten somit einen wesentlichen Beitrag zur Verringerung der Schmutz- und Schadstoffbelastung der Vorfluter.

Regenwasser enthält nur Spuren der härtebildenden Kationen Kalzium und Magnesium. Beim Wäschewaschen mit Regenwasser kann deshalb bis zu 50% an Waschmittel eingespart werden, bei gleichem Waschergebnis. Die Wasserqualität ermöglicht die Verwendung von Waschmittelrezepturen ohne Inhaltsstoffe zur Wasserenthärtung. Die problematischen Verbindungen Phosphat und NTA gelangen nicht mehr durchs Wäschewaschen ins Abwasser. Dadurch werden Kläranlagen und Vorfluter entlastet. Neben der Einsparung von Trinkwasser hat die konsequente Nutzung und Versickerung von Regenwasser auch günstige Wirkungen auf die Abwasserbeseitigung.

Anmelder Thilo Herrmann, Adolf-von Gross Str.8, D-8580 Bayreuth Anlage zur Aufbereitung, Speicherung und Förderung von Regenwasser zur Nutzung als Brauchwasser oder zur Regenwasserbehandlung zum Zwecke der Versickerung oder der Einleitung in einen Vorfluter.

## Patentansprüche

1. Anlage zur Aufbereitung, Speicherung und Förderung von Regenwasser zur Nutzung als Brauchwasser oder zur Regenwasserbehandlung zum Zwecke der Versickerung oder der einleitung in einen Vorfluter, dadurch gekennzeichnet, daß nach Fig. 1 das Regenwasser über im Erdreich frostsicher und normgerecht verlegte Entwässerungsleitungen (ENT) einem Sieb-, Filter- und Sedimentationssystem (S) zugeführt wird, und von dort über eine Verschlußeinrichtung (VSE) und ein Sommer-Winter-Umschaltventil (SWU) über eine Leitung (EL) und einen Rohrkrümmer (RB) im unteren Bereich des Speicherbehälters (VB) innerhalb der Einlaufkrammer (BEH1) einfließt mit Strömungsrichtung nach oben.

2. Anlage nach Anspruch 1, dadurch gekennzeichnet, daß gemäß Fig. 2 das Wasser im unteren Bereich durch Einlaufmuffen mit Steckanschluß (E) in ein Filtergehäuse (FIG) einströmt, mit verringerter Strömungsgeschwindigkeit in eine Sedimentationszone (SZ) gelangt, Schmutzteilchen auf dem Boden eines herausnehmbaren Einsatzes (TS) sedimentieren, das Wasser dann zwischen dem Filtergehäuse (FIG) und den zylindrisch- rotationssymmetrisch oder parallel oderfaltenförmig angeordneten, perforierten Wänden des Filterkorbs (FK) hochströmt, durch die Perforation des Filterkorbs hindurch senkrecht zur zum Filterkorb (FK) durch die Filtermasse (FS) hindurch überein perforiertes Rohr (FR) oder anstatt dessen eine zweite Filterwand zum Abgang (AG) strömt, oder bei Starkregenereignissen und völligem Überstau des Filterkorbs durch den Bypass (BY) unter einem als Tauchwand ausgebildeten Hut (HT) und ein darin befindliches abnehmbares Grobsieb (GS) direkt zum Abgang (AG) fließt.

3. Anlage nach Anspruch 2, dadurch gekennzeichnet, daß der Filterkrob (FK) in einer Muffe (MF) befestigt ist, so daß zur Reinigung der Filtermasse (FS) der ganze Filterkorb (FK) mit Filtermasse (FS) herausgenommen und entleert werden kann.

4. Anlage nach Anspruch 3, dadurch gekennzeichnet, daß im unteren Bereich der Filtermasse (FS) im Filterkorb (FK) eine Rohrleitung (RSL) zur Rückspülung der Filtermasse angeordnet wird und diese Rückspülleitung nach unten aus dem Filterkorb herausgeführt steckbar im Sockel (BF) angeschlossen ist.

5. Anlage nach Anspruch 4, dadurch gekennzeichnet, daß im Bodenbereich der Sedimentationszone (SZ) eine Bodenspülleitung (BSL) mit Düsen angebracht wird, zur Aufwirbelung des Bodensatzes auf dem Boden (B) und diese mit der Rückspülleitung (RSL) kombiniert werden kann.

6. Anlage nach Anspruch 1 bis 5, dadurch gekennzeichnet, daß das Filtergehäuse (FIG) eine Überlauföffnung (UE) mit Absperrgitter (ABS) und Geruchsverschluß (GV) besitzt, der im Filtergehäuse (FIG) intergriert sein kann.

7. Anlage nach Anspruch 6, dadurch gekennzeichnet, daß die Filtermasse aus gerundetem, körnigem oder bröckeligem Material besteht. Zur Anwendung kommt Tongranulat, Ziegelspiltt, Blähtonsplitt, vulkanische oder industrielle Schlacken, Bims- oder Tuffstein, Naturgesteinsplitt, Kunststoffgranulat, Aktivkohle, Rinde, Holzkohle.

8. Anlage nach Anspruch 1 bis 7, dadurch gekennzeichnet, daß der Filterwiderstand und Belegungsgrad der Filtermasse (FS) durch Messung der Überstauhöhe (WS) zwischen Filtergehäuse (FIG) und Filterkorb (FK) und/oder der Überstauhäufigkeit mittels eines mechanischen, elektrischen oder elektronischen Füllstandsmeßgeräts (FÜ) gemessen wird.

9. Anlage nach Anspruch 1 bis 8, dadurch gekennzeichnet, daß gemäß Fig. 3 der Filterkorb (FK) aus baugleichen Teilstücken (TK) zusammengesetzt ist, die zusammen mit einem Ober- (TO) und Unterteil (TU) die Herstellung von Filterkörben verschiedener Höhen aus nur drei verschiedenen Standardbauteilen gestatten.

10. Anlage nach Anspruch 1 bis 9, dadurch gekennzeichnet, daß zur Anpassung an unterschliedliche Filterleistungen beliebig viele Filterkörbe (FK) und Sockel (BF) parallel in einem gemeinsamen Filtergehäuse angeordnet sind.

11. Anlage nach Anspruch 1 bis 10, dadurch gekennzeichnet, daß der Speicherbehälter im Inneren gemäß Fig. 1 eine oben offene Einlaufkammer(BEH1) und eine oben geschlossene Reinwasserkammer (BEH2) bestizt, die jeweils an der der Speicherwand zugewendeten Seite perforiert sind derart, daß die Perforation (BOH2) der Reinwasserkammer (BEH2) von der Außenseite der Kammer schräg nach oben laufend zur Innenseite der Kammer gemäß Fig. 1 verläuft, so daß Schwimmstoffe nicht von außen nach innen in die Kammer eindringen können und, daß das über die Leitung (EL in die Einlaufkammer (BEH1) laufende Wasser gem. Fig. 1 durch eine Perforation (BOH 1) verzögert und mit geringerer kinetischer Energie aus der Einlaufkammer (BEH1) in den freien Raum (FA) des Speicher (VB) strömt.

12. Anlage nach Anspruch 1 bis 11, dadurch gekennzeichnet, daß der Speicherbehälter in der Reinwasserkammer (BEH2) oder im außerhalb liegenden Bereich (FA) eine Ultraviolettlichtquelle zur Ozonerzeugung und zur Reduktion des Wachstums von Mikroorganismen angebracht ist und in Abhängigkeit der Wasserentnahme verbrauchsabhängig gesteuert wird von der zentralen Steuerung (ZS).

13. Anlage nach Anspruch 1 bis 12 dadurch gekennzeichnet, daß auf dem Boden des Speicherbehälters (VB) eine in Fig. 1 nur ansatzweise gezeichnete Schicht Erde oder Lehm (HM) aufgebracht ist, die mit Nematoden und oder Lumbriciden beimpft ist.

14. Anlage nach Anspruch 1 bis 13, dadurch gekennzeichnet, daß der Speicher eine Überlaufleitung (ÜLF) geringen Durchmessers mit Rückflußverhinderer(RFV) und manuellem oderfernthermostatisch gesteuertem Absperrventil (ASV) besitzt, die in die außerhalb liegende Überlaufleitung (ÜAF) mündet und eine bodenfrostabhängige Steuerung des maximalen Füllstands im Speicherbehälter (VB) ermöglicht ohne daß es der Sommer-Winter- Umschalteinrichtung (SWU) bedarf.

15. Anlage nach Anspruch 1 bis 14, dadurch gekennzeichnet, daß der Speicher gegen Auftrieb gesichert ist durch eine Einrichtung mit eingebauten Rückflußverhinderer (AUF) gemäß Fig. 1 und 4, über die außen am Behälter anstehendes Wasser bei Überschreiten der Einbauhöhe der Einrichtung (AUF) nach Passage eines außen liegenden Dränrohres (DRO) nach innen in den Speicherbehälter geleitet wird.

16. Anlage nach Anspruch 1 bis 15, dadurch gekennzeichnet, daß die Rohre und Leitungen mittels einer Mauerdurchführung mit mehreren Durchlässen (MDF) gemäß Fig.7 durch die Wand des Speicherbehälters (VB) und die Gebäudewände gedichtet hindurchgeführt werden, derart daß gem. Fig. 7 ein Block (B) mit mehreren Bohrungen für Rohr (R) und- Kabeldurchlaß (K), die zu einer zylindrischen (BZ) oder konischen (BK) Buchse auf einer Seite erweitert sind, zur Aufnahme einer Dichtung (O) und einer zylindrischen (PZ) oder konischen (PK) Druckplatte mit Bohrung entsprechend dem Durchmesser der Rohre oder Leitungen, die mit dem Block (B) durch die Schrauben (S) verschraubt und gegen den Dichtring (O) gepresst wird und nicht benötigte Öffnungen des Blocks (B) mit einer Blindplatte ohne Bohrung entsprechend (BZ) oder (PZ) verschlossen werden, wobei der Block B symmetrisch zur Achse A, Fig. 7 auf beiden Seiten der Bohrungen zu einer Buchse erweitert sein kann, und auf beiden Seiten mit O-Ringen und Druckplatten versehen ist, so daß jede Leitung doppelt gedichtet wird.

17. Anlage nach Anspruch 16, dadurch gekennzeichnet, daß der Block (B) quaderförmig oder rund ausgebildet ist mit einer Profilierung (RF) an den umlaufenden Seiten, zum direkten Einmauern oder Einbetonieren oder anstatt der Profilierung einen Flansch (FLA) besitzt zum verkleben oder verschweißen mit Kunststoffbehältern.

18. Anlage nach Anspruch 16 und 17, dadurch gekennzeichnet, daß durch Aufstecken von beleibig vielen Verlängerungsstücken (SR) auf den Block (B) verschiedene Wandstärken (t) überbrückt werden können.

19. Anlage nach Anspruch 1 bis 18, dadurch gekennzeichnet, daß Absperrventile, Verschraubungen, Rohrleitungen, Membrandruckbehälter, Membrandruckschalter, Magnetventil für Trinkwassernachlauf, Trinkwassereinlauftrichter in Nachspeiseleitung, Wasserzähler für Regen- und Trinkwasserverbrauch und die elektrische Steuereinrichtung (ZS) und ggf. die Förderpumpe eine Montageeinheit bilden zum anschlußfertigen Einbau in Gebäude.

20. Anlage nach Anspruch 1 bis 19, dadurch gekennzeichnet, daß gemäß Fig. 1 das Filtergehäuse unterhalb des Bodens (B) nach unten verlängert ist und die Wände (WB) und der Boden (BB) perforiert sind und die Überlaufleitung (ÜAF) bzw. (ÜLF) in diesen Gehäuseteil münden zur Versickerung des Überlaufwassers in eine des Filtergehäuse und den Speicherbehälter im unteren Bereich außen umgebende Kiesschüttung.
